# EUROPÄISCHE PATENTSCHRIFT

(11) **EP 0 894 222 B1**
(45) Veröffentlichungstag und Bekanntmachung des Hinweises auf die Patenterteilung: **04.10.2000**
(21) Anmeldenummer: 97920692.7
(22) Anmeldetag: 16.04.1997
(51) Int. Cl.: F24C 15/10

(54) **RAHMEN FÜR EIN KOCHFELD**
FRAME FOR A COOKTOP
CADRE POUR TABLE DE CUISSON

(30) Priorität: 20.04.1996 DE 19615769; 27.02.1997 DE 19707857
(43) Veröffentlichungstag der Anmeldung: 03.02.1999
(73) Patentinhaber: LKH-Kunststoffwerk GMBH & CO. KG, 35708 Haiger (DE)
(72) Erfinder: STEDRON, Horst, D-35745 Herborn (DE)
(74) Vertreter: Fleck, Hermann-Josef, Dr.-Ing.
(86) Internationale Anmeldenummer: EP9701886
(87) Internationale Veröffentlichungsnummer: WO9740318

(56) Entgegenhaltungen:
- EP-A- 0 101 002
- EP-A- 0 578 601
- DE-A- 19 525 825
- FR-A- 2 424 486

## Beschreibung

Die Erfindung betrifft einen Rahmen für ein Kochfeld, der aus Profilstücken besteht, wobei die Profilstücke das Kochfeld zumindest teilweise umfassen und eine Sichtfläche aufweisen, und wobei an den Rahmen eine Aufnahmevorrichtung angeschlossen ist, die elektrische Installationseinheiten unter dem Kochfeld angeordnet hält.

Ein solcher Rahmen ist aus der FR 2 424 486 bekannt. In diesem Dokument ist ein Rahmen beschrieben, der eine Glaskeramikplatte randseitig einfaßt und trägt. Der Rahmen ist auf seiner Sichtfläche mittels eines Bandes aus rostfreiem Stahl überdeckt.

Aus der DE 88 01 334 U1 ist ein weiterer gattungsgemäßer Rahmen bekannt. Ein solcher Rahmen wird beispielsweise verwendet, um einen Übergang zwischen einem Ceran-Kochfeld und einer anschließenden Arbeitsplatte zu schaffen.

Der Rahmen übernimmt hierbei vornehmlich die Aufgabe, das Kochfeld festzulegen und einen optischen Abschluß zu erreichen. Zur Festlegung umfassen die Profilstücke das Kochfeld an seinen Seiten. Die Profilstücke sind hierbei meist einstückig miteinander zu einem geschlossenen Rahmen verbunden. Es ist aber auch denkbar, einzelne Profilstücke vorzusehen, die dann miteinander verbunden werden.

Für den optischen Abschluß überragt die Sichtfläche die Kantenbereiche des Kochfelds und der Arbeitsplatte, sowie den Spalt zwischen Kochfeld und Arbeitsplatte. Für ein ansprechendes Äußeres wird der Kunststoff, aus dem der Rahmen hergestellt ist, eingefärbt oder bei höherwertigen Rahmen die Sichtfläche lackiert. Die Lackierung hat den Nachteil, daß sie leicht verkratzt, wenn Töpfe über den Rahmen gezogen werden. Zudem können graphisch ausgestaltete Dekors nicht mit vertretbarem Aufwand aufgebracht werden.

Es ist Aufgabe der Erfindung, einen Rahmen für ein Kochfeld zu schaffen, bei dem die Sichtfläche universell gestaltet werden kann.

Die Aufgabe der Erfindung wird dadurch gelöst, daß die Sichtfläche mit einer Folie überzogen ist.

Mit der Folie können alle möglichen Oberflächenstrukturen, wie beispielsweise Holz, Gestein, Chrom etc. nachgebildet werden. Insbesondere können auch komplizierte graphische Strukturen auf der Folie abgebildet sein.

Da die Folie als separates Teil auf dem Rahmen aufgebracht ist, können zudem die physikalischen Eigenschaften der Sichtfläche verändert werden. Beispielsweise kann die Folie kratzfest und druckbeständig sein. Auch ist es vorteilhaft, wenn die Folie chemikalienbeständig ist.

Als Besonderheit ist weiterhin herauszustellen, daß die Rahmen in sehr kleinen Losgrößen gefertigt werden können, da jeder Rahmen individuell mit einer Folie überzogen werden kann.

Nach einer bevorzugten Ausgestaltung der Erfindung ist vorgesehen, daß die Profilstücke einstückig zusammengefaßt sind, daß die Profilstücke und/oder die Folie aus einem duroplastischen Kunststoffmaterial bestehen, wobei das Kunststoffmaterial für die Profilstücke uneingefärbt ist. Da alleine die Sichtfläche dem Betrachter hier zugewandt ist, kann auf ein Einfärben des Kunststoffes verzichtet werden. Der duroplastische Kunststoff wird vornehmlich auf Melamin-Basis bestehen und kann glasfaserverstärkt sein. Bei der Verwendung unterschiedlicher Materialien können auch verschiedene Werkstoffeigenschaften ausgenutzt werden, so daß der Rahmen individuell anpaßbar ist.

Ein erfindungsgemäßes Verfahren zur Herstellung eines Rahmens für ein Kochfeld ist dadurch gekennzeichnet, daß auf einer Sichtfläche des Rahmens eine Folie aufgebracht und diese mit dem Rahmen verbunden wird

Ist hierbei vorgesehen, daß die Folie in ein Preßwerkzeug eingelegt wird, daß in das Preßwerkzeug weiterhin ein Kunststoffmaterial eingebracnt wird, und daß das Kunststoffmaterial mit der Folie unter Wärmezufuhr zu dem Rahmen verpreßt wird, dann kann der Rahmen in einem Arbeitsgang gefertigt werden. Das Kunststoffmaterial kann beispielsweise von einem Halbzeug abgelängt werden. Infolge der Wärmezufuhr wird das Kunststoffmaterial in einen verformbaren Zustand gebracht. Infolge der Verpressung in dem Preßwerkzeug erfolgt die Formgebung des Rahmens. Gleichzeitig wird die Folie auf die Sichtfläche aufgedrückt und infolge der Wärmezufuhr mit dieser innig verbunden.

Als vorteilhaft hat es sich erwiesen, wenn vorgesehen ist, daß die Folie in ihren Abmessungen so zugeschnitten wird, daß sie nach dem thermischen Verpressen die Sichtfläche seitlich überragt, und daß nach dem thermischen Verpressen die überstehenden Teile beim Entgraten des Rahmens abgetrennt werden.

Dadurch, daß die Folie größer dimensioniert ist als die Sichtfläche, ist der Ausschuß auf ein Minimum reduziert, da auch bei einer Verschiebung der Folie gegenüber dem Rahmen während des Preßvorganges eine vollständige Überdeckung der Sichtfläche stets gewährleistet ist. Weiterhin ist dadurch, daß die überstehenden Teile abschließend abgetrennt, wird ein definierter Abschluß mit der Sichtfläche geschaffen.

Nach einem alternativen erfindungsgemäßen Verfahren ist vorgesehen, daß die Folie auf die Sichtfläche des aus Kunststoff bestehenden Rahmens aufgelegt und mit diesem unter Wärmezufuhr verbunden wird. Der Rahmen ist hierbei ein vorgefertigtes Teil, das beispielsweise im Spritzgußverfahren hergestellt wird. Dieses kann dann nachträglich mit der Folie beschichtet werden.

Die Erfindung wird im folgenden anhand eines in den Zeichnungen dargestellten Ausführungsbeispieles näher erläutert. Es zeigen:
- Fig. 1: in perspektivischer Darstellung ein Ceran-Kochfeld und einen Rahmen und
- Fig. 2 a-d: die Verfahrensschritte zur Herstellung des Rahmens gemäß Fig. 1.

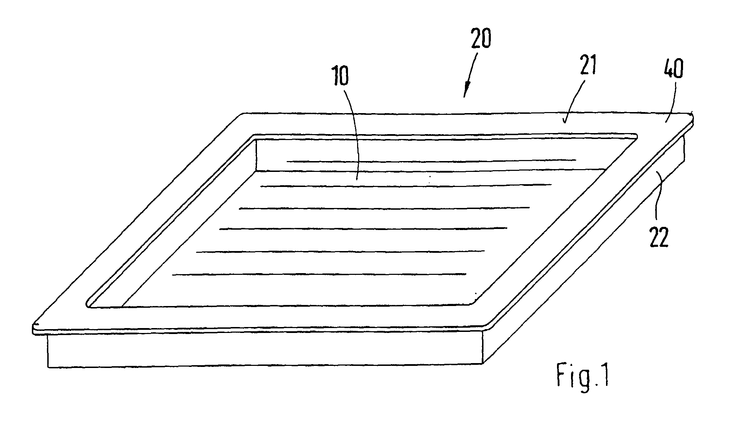

In Fig. 1 ist ein Ceran-Kochfeld 10 gezeigt, das von einem Rahmen 20 umgeben ist. Der Rahmen 20 besteht aus einzelnen Profilstücken, die miteinander einstückig verbunden sind. Die Profilstücke weisen einen vertikalen Steg 22 auf, an den rechtwinklig eine Platte angeschlossen ist. Die Platte bildet eine Sichtfläche 21, die nach oben gekehrt ist. Platte und Steg 22 sind im Querschnitt T-förmig zusammengesetzt. Die Sichtfläche 21 ist vorliegend eben ausgebildet. Es ist aber auch jedes andere Oberflächenprofil denkbar. Beispielsweise kann ein Wellenprofil oder Zacken vorgesehen sein. Auf die Sichtfläche 21 selbst ist eine Folie 40 aufgebracht.

An den Steg 22 kann eine Aufnahmevorrichtung für elektrische Installationselemente angeschlossen werden. Hierzu sind beispielsweise am Steg 22 Befestigungsmöglichkeiten vorhanden. Denkbar ist aber auch, daß die Aufnahmevorrichtung einstückig mit dem Rahmen 20 verbunden ist.

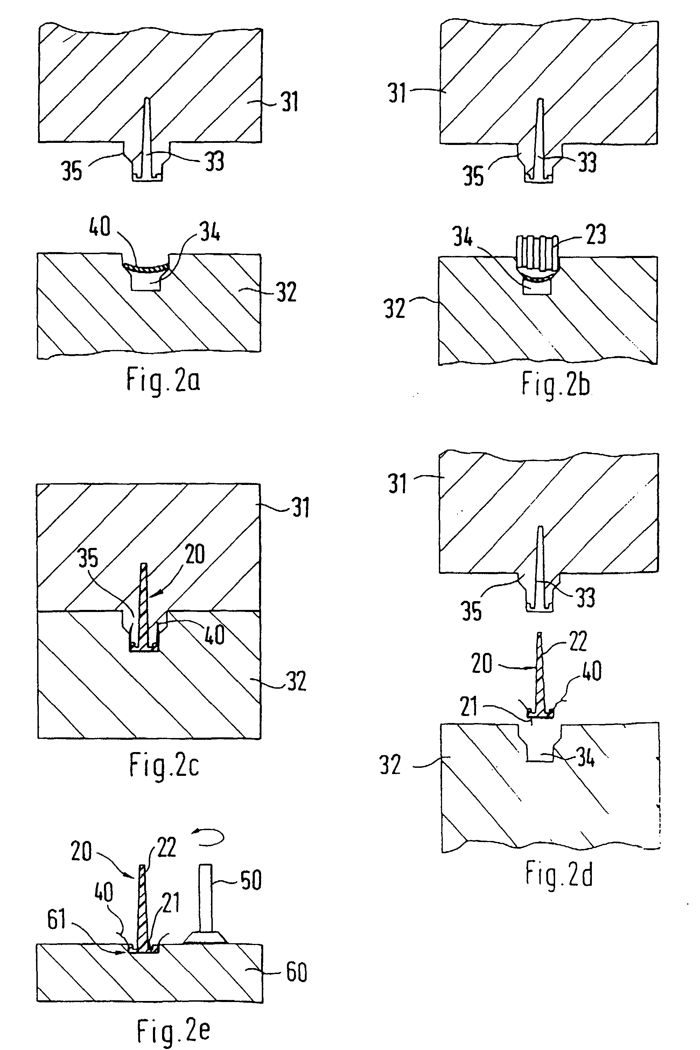

Das Verfahren zur Herstellung des in Fig. 1 dargestellten Rahmens 20 wird im folgenden anhand der Fig. 2 a-d näher erläutert.

In Fig. 2a ist ein Preßwerkzeug gezeigt, das aus einer ersten und einer zweiten Formhälfte 31 und 32 besteht. Die erste Formhälfte 31 weist einen Stempel 35 auf, in den eine Aufnahme 33 eingebracht ist. Die Aufnahme 33 bildet die Negativkontur des Rahmens 20. In die zweite Formhälfte 32 ist eine Aussparung 34 eingebracht. In diese kann der Stempel 35 der ersten Formhälfte eingesetzt werden.

Zur Durchführung des Herstellungsverfahrens wird zunächst bei geöffnetem Preßwerkzeug die Folie 40 in die Aussparung 34 der zweiten Formhälfte 32 eingelegt. Hierbei weist die Seite der Folie 40, die beispielsweise das Dekor, die Oberflächenstruktur etc. aufweist in die dem Stempel 35 abgekehrte Richtung.

In einem zweiten Verfahrensschritt, wie er der Fig. 2b entnehmbar ist, wird ein Kunststoffmaterial 23 zugeschnitten und oberhalb der Folie 40 in die zweite Formhälfte 32 eingesetzt. Zur Aufnahme der Folie 40 und des Kunststoffmaterials 23 ist die Aussparung 34 nach oben erweitert. Damit stützen sich Kunststoffmaterial 23 und Folie 40 an einem Absatz ab und sind beabstandet zur Bodenfläche der Aussparung 34 angeordnet.

Anschließend wird, wie die Fig. 2c zeigt, das Preßwerkzeug geschlossen. Hierzu wird die erste Formhälfte 31 auf die zweite 32 aufgefahren. Der Stempel 35 dringt hierbei in die Aussparung 34 ein. Das Kunststoffmaterial wird unter Wärmezufuhr in einen verformbaren Zustand gebracht, so daß es beim Schließen des Preßwerkzeuges in die Aufnahme 33 fließt. Damit wird der Steg 22 des Rahmens 20 gebildet. Die Platte, welche die Sichtfläche 21 trägt, entsteht zwischen der Stirnseite des Stempels 35 und der zweiten Formhälfte 32. Beim Eintiefen des Stempels 35 wird gleichzeitig die Folie 40 weiter in die Aussparung 34 eingezogen und legt sich über die entstehende Sichtfläche 21 des Rahmens.

Bei geschlossenem Preßwerkzeug ist die gesamte Negativ-Rahmenkontur mit dem Kunststoffmaterial 23 und der Folie 40 ausgefüllt. Hierdurch entsteht ein Druck in dem Preßwerkzeug. Infolge dieses Druckes und der zugeführten Wärme verbinden sich die Folie 40 und die Sichtfläche 21 des Rahmens 20 miteinander. Nach einer Verweilzeit härtet der Rahmen 20 aus. Dann kann das Preßwerkzeug wieder geöffnet und der Rahmen 20 ausgestoßen werden, wie in Fig. 2d dargestellt. Wie aus dieser Darstellung ersichtlich ist, war die Folie 40 in ihrem Rohzustand größer dimensioniert als die Sichtfläche 21 des Rahmens 20, so daß Abfallstücke die Sichtfläche 21 überragen. Diese überstehenden Teile werden in einem abschließenden Entgratschritt abgetrennt. Diese Situation zeigt 2c.

Zum Entgraten wird der Rahmen 20 mit seiner Sichtfläche 21 nach unten gekehrt in einer Ausnehmung 61 eines Aufnahmeteils 60 eingelegt. Der Steg 22 ragt hierbei über das Aufnahmeteil 60 vor. Mit einem Werkzeug 50 werden dann die überstehenden Stücke der Folie 40 abgeschnitten und gleichzeitig die die Sichtfläche 21 tragende Platte entgratet. Dadurch, daß gleichzeitig das Abtrennen der überstehenden Teile und das Entgraten stattfindet, kann stets ein bündiger Abschluß der Folie 40 mit der Sichtfläche 21 sichergestellt werden.

## Patentansprüche

1. Rahmen (20) für ein Kochfeld (10), der aus Profilstücken besteht, wobei die Profilstücke das Kochfeld (10) zumindest teilweise umfassen und eine Sichtfläche (21) aufweisen, und wobei an den Rahmen (20) eine Aufnahmevorrichtung angeschlossen ist, die elektrische Installationseinheiten unter dem Kochfeld (10) angeordnet hält,
dadurch gekennzeichnet,
daß die Sichtfläche (21) mit einer Folie (40) überzogen ist.

2. Rahmen nach Anspruch 1,
dadurch gekennzeichnet,
daß die Aufnahmevorrichtung wannenförmig ausgebildet und einstückig mit dem Rahmen verbunden ist.

3. Rahmen nach Anspruch 1 oder 2,
dadurch gekennzeichnet,
daß die Folie (40) auf ihrer dem Rahmen (20) abgekehrten Seite mit einem Dekor und/oder einer Oberflächenstruktur versehen ist.

4. Rahmen nach einem der Ansprüche 1 bis 3,
dadurch gekennzeichnet,
daß die Profilstücke einstückig zusammengefaßt sind,
daß die Profilstücke und/oder die Folie (40) aus einem duroplastischen Kunststoffmaterial bestehen, wobei das Kunststoffmaterial für die Profilstücke uneingefärbt ist.

5. Verfahren zur Herstellung eines aus Profilstücken bestehenden Rahmens (20) für ein Kochfeld (10),
dadurch gekennzeichnet,
daß auf einer Sichtfläche (21) des Rahmens (20) eine Folie (40) aufgebracht und diese mit dem Rahmen (20) verbunden wird.

6. Verfahren nach Anspruch 5,
dadurch gekennzeichnet,
daß die Folie (40) in ein Preßwerkzeug eingelegt wird,
daß in das Preßwerkzeug weiterhin ein Kunststoffmaterial (23) eingebracht wird, und
daß das Kunststoffmaterial (23) mit der Folie (40) unter Wärmezufuhr zu dem Rahmen (20) verpreßt wird.

7. Verfahren nach Anspruch 6,
dadurch gekennzeichnet,
daß die Folie (40) in ihren Abmessungen so zugeschnitten wird das sie nach dem thermischen Verpressen die Sichtfläche (21) seitlich überragt, und
daß nach dem thermischen Verpressen die überstehenden Teile beim Entgraten des Rahmens (20) abgetrennt werden.

8. Verfahren nach Anspruch 5,
dadurch gekennzeichnet,
daß die Folie (40) auf die Sichtfläche (21) des aus Kunststoff bestehenden Rahmens (20) aufgelegt und mit diesem unter Wärmezufuhr verbunden wird.

## Claims

1. Frame (20) for a cooking area (10) which comprises profile pieces, the profile pieces enclosing the cooking area (10) at least partially and having a visible face (21), and a receiver apparatus, which keeps electrical installation units disposed below the cooking area (10), communicating with the frame (20), characterised in that the visible face (21) is covered with a film (40).

2. Frame according to claim 1, characterised in that the receiver apparatus has a trough-shaped configuration and is integrally connected to the frame.

3. Frame according to claim 1 or 2, characterised in that the film (40) is provided, on its side remote from the frame (20), with a decoration and/or a surface structure.

4. Frame according to one of claims 1 to 3, characterised in that the profile pieces are fitted together in one piece, and in that the profile pieces and/or the film (40) are/is formed from a thermosetting plastics material, the plastics material for the profile pieces not being coloured.

5. Method of producing a frame (20) for a cooking area (10) comprising profile pieces, characterised in that a film (40) is applied to a visible face (21) of the frame (20), and said film is connected to the frame (20).

6. Method according to claim 5, characterised in that the film (40) is introduced into a pressing tool, in that a plastics material (23) is also inserted into the pressing tool, and in that the plastics material (23) is extruded with the film (40) by supplying heat to the frame (20).

7. Method according to claim 6, characterised in that the film (40) is cut in respect of its dimensions so that it protrudes laterally beyond the visible face (21) after the thermal extrusion process, and in that the protruding portions are severed after the thermal extrusion process during the deburring of the frame (20).

8. Method according to claim 5, characterised in that the film (40) is placed upon the visible face (21) of the frame (20), which is formed from plastics material, and said film is joined to the frame by the supply of heat.

## Revendications

1. Cadre (20) pour table ou plan de cuisson (10), cadre constitué de profilés, où les profilés ceinturent tout au moins partiellement la table ou le plan de cuisson (10) et présentent une surface visible (21), et où à la table est raccordé un dispositif de réception, qui maintient au-dessous de la table de cuisson des appareillages électriques,
caractérisée
en ce que la surface visible (21) est revêtue d'une feuille (40).

2. Cadre suivant la revendication 1,
caractérisé
en ce que le dispositif de réception est en forme de cuve et est relié au cadre pour en faire partie intégrante.

3. Cadre suivant la revendication 1 ou la revendication 2,
caractérisé
en ce que sur sa face non orientée vers le cadre (20), la feuille présente un décor et/ou une structure de surface.

4. Cadre suivant l'une quelconque des revendications de 1 à 3,
caractérisé en ce que les profilés sont réunis en une pièce, en ce que les profilés et/ou la feuille (40) sont constitués d'une matière plastique thermodurcissable, où la matière plastique pour les profilés n'est pas teintée.

5. Procédé pour la fabrication d'un cadre (20) constitué de profilés pour une table ou un plan de cuisson (10),
caractérisé
en ce que sur une surface visible (21) du cadre (20) est apposée une feuille (40) et que celle-ci est réunie au cadre (20).

6. Procédé suivant la revendication 5,
caractérisé
en ce que la feuille (40) est placée dans un moule à compression,
en ce que dans le moule à compression est introduite en outre une matière plastique (23), et
en ce que la matière plastique (23) est comprimée conjointement avec la feuille (40) pour la formation du cadre (20).

7. Procédé suivant la revendication 6,
caractérisé
en ce que la feuille (40) est découpée de manière telle, en ce qui concerne ses dimensions, qu'après la compression thermique, elle dépasse latéralement la surface visible, et en ce qu'après la compression thermique, les portions qui dépassent sont sectionnées lors de l'ébarbage du cadre (20).

8. Procédé suivant la revendication 5,
caractérisé
en ce que la feuille (40) est placée sur la surface visible (21) du cadre (20) en matière plastique et est reliée à celui-ci par adduction de chaleur.
